Europäisches Patentamt

European Patent Office

Office européen des brevets

(11) Numéro de publication: **0 213 033**
A1

## (12) DEMANDE DE BREVET EUROPEEN

(21) Numéro de dépôt: **86401750.4**

(22) Date de dépôt: **05.08.86**

(51) Int. Cl.⁴: **B 62 D 65/00,** B 23 Q 7/14

(30) Priorité: **06.08.85 FR 8512017**

(43) Date de publication de la demande: **04.03.87**
**Bulletin 87/10**

(84) Etats contractants désignés: **BE DE GB IT NL SE**

(71) Demandeur: **GRACO FRANCE, 113-117, Rue des Solets -**
**Cidex L 141, F-94523 Rungis-Silic (FR)**

(72) Inventeur: **Van der Wijngaart, Aad, Olympia Straat 32,**
**NL-4818 TP Breda (NL)**

(74) Mandataire: **Rinuy, Santarelli, 14, avenue de la Grande**
**Armée, F-75017 Paris (FR)**

(54) **Procédé et dispositif de contrôle du déplacement d'un produit dans un segment d'une chaîne de fabrication.**

(57) Selon l'invention dans une phase de détection, on détecte le produit (10) dès que ce dernier est dans une position de référence (201); on désolidarise alors le chariot de convoyage (300) du convoyeur moteur (301); on dispose le produit (10) dans un chariot de manutention (111) mobile en translation le long du segment (103); on déplace le chariot de manutention (110) selon une loi de mouvement prédéterminé le long du segment (103); à l'extrémité aval (102) du segment (103), on resolidarise le chariot de convoyage (300) audit convoyeur (301); puis on libère le produit (10) du chariot de manutention (110).

Application notamment aux chaînes de montage de véhicules automobiles.

ACTORUM AG

## Procédé et dispositif de contrôle du déplacement d'un produit dans un segment d'une chaîne de fabrication

La présente invention concerne, d'une manière générale, les chaînes de fabrication de produits.

Au sens de la présente invention, le terme "produit" vise tout produit susceptible d'être fabriqué dans une chaîne de fabrication dans laquelle chaque produit est suspendu à un chariot de convoyage entraîné le long de la chaîne par un convoyeur-moteur. Ainsi en est-il, par exemple, de la fabrication de certains organes de véhicules automobiles ou, dans un autre domaine, de certaines pièces d'électro-ménager ou d'ameublement.

Les produits ainsi suspendus se déplacent le long de la chaîne, à une vitesse constante qui est, s'agissant par exemple de carrosseries pour automobiles, de l'ordre de quelques centimères par seconde jusqu'à une dizaine de mètres par minute par exemple. Diverses opérations automatisées ou même robotisées sont réalisées en des endroits déterminés de la chaîne de fabrication.

D'une manière générale, ce type de chaîne de fabrication donne satisfaction mais présente, dans certains cas particuliers, des inconvénients.

En effet, s'agissant par exemple des opérations de mise en peinture des carrosseries automobiles, on constate les phénomènes suivants :

- comme les carrosseries sont suspendues à des élingues, elles peuvent être animées d'un mouvement de balancement,

- il existe, dans certaines configurations, des différences d'altitude entre une carrosserie et une autre, ces différences d'altitude étant dues soit à un vrillage ou à un torsadage d'élingues, soit à une mauvaise disposition du point d'élingue sur une carrosserie déterminée,

- l'avancement souvent saccadé du convoyeur-moteur amplifie le mouvement de balancement énoncé plus haut.

Ces défauts se conjugent entre eux et ont pour résultat que, à un instant donné, la position exacte de la carrosserie à peindre n'est pas connue avec précision.

Comme la mise en peinture est une opération, en général robotisée, nécessitant une grande précision, l'absence de connaissance de la position exacte de la carrosserie de la voiture à un instant donné entraîne des difficultés supplémentaires pour la mise en oeuvre du robot de peinture, difficultés qui se traduisent par une mauvaise précision de la pulvérisation. Ce défaut est particulièrement accentué s'agissant de la peinture intérieure des carrosseries qui nécessitent un positionnement encore plus précis, car il peut ya voir, au moins pour certains types de carrosseries, une interférence entre certaines parties de la carrosserie et le bras du robot.

On conçoit donc que les exigences quant à la connaissance exacte de la position de la carrosserie à un instant donné soient encore plus importantes s'agissant des opérations de mise en peinture de l'intérieur.

Ce qui vient d'être dit pour les opérations de mise en peinture d'une carrosserie automobile est bien évidemment valable s'agissant d'autres opérations sur ces carrosseries, telles que le soudage de certains éléments et reste valable, d'une manière générale, pour tous produits fabriqués dans une chaîne de fabrication dans laquelle les produits sont suspendus par des élingues à un chariot convoyeur, des opérations précises de montage, de traitement et plus généralement de fabrication, devant être effectuées sur ces produits et nécessitant la connaissance de la position exacte de ce dernier au moins à un instant donné.

La présente invention permet notamment de résoudre ce problème technique et vise à cet effet d'une part, un procédé de déplacement contrôlé d'un produit dans un segment d'une chaîne de fabrication de produits et, d'autre part, un dispositif de déplacement contrôlé d'un produit permettant la mise en oeuvre du procédé.

Selon l'invention, le procédé de déplacement contrôlé d'un produit dans un segment d'une chaîne de fabrication de produits, dans laquelle chaque produit est suspendu à un chariot de convoyage entraîné le long de la chaîne par un convoyeur-moteur, le chariot de convoyage étant susceptible d'être désolidarisé du convoyeur-moteur, est notamment caractérisé en ce que le segment s'étendant entre une extrémité amont, par rapport au déplacement du produit dans la chaîne, et une extrémité aval, lorsqu'un produit pénètre dans le segment :

a) dans une phase dite "de détection", on détecte le produit dès que ce dernier est dans une position longitudinale dite "position de référence"

b) dans une phase dite de "débrayage", on désolidarise le chariot de convoyage du convoyeur-moteur,

c) dans une phase dite, par commodité, "de prise en charge", on dispose le produit dans un chariot de manutention mobile le long du segment,

d) dans une phase dite "de travail", on déplace le chariot de manutention selon une loi de mouvement prédéterminée le long dudit segment,

e) dans une phase dite "de reprise", on resolidarise, au voisinage de l'extrémité aval dudit segment, le chariot de convoyage au convoyeur-moteur,

f) dans une phase dite, par commodité, "de décharge", on libère le produit du chariot de manutention.

Grâce à ces dispositions, la présente invention permet de pallier tous les inconvénients énoncés plus haut. En effet, dès que le produit est détecté dans la position longutidinale dite "position de référence", il est pris en charge par un chariot de manutention en sorte qu'il n'est plus porté par les élingues mais par ce chariot de manutention. On évite ainsi le balancement du produit au bout des élingues avec les conséquences énoncées plus haut.

De plus, on notera que la position du produit est connue de façon précise dès que ce dernier est détecté dans la position de référence. Le robot ayant pour fonction de réaliser certaines opérations de fabrication ou de montage dans le segment de la chaîne, dispose ainsi d'une référence spatiale précise du produit. La mise en oeuvre de ce robot est ainsi grandement facilitée, surtout s'il s'agit, par exemple d'un robot destiné à la mise en peinture des carrosseries automobiles. Il en résulte d'ailleurs, dans ce cas, une pulvérisation de peinture présentant de bien meilleures caractéristiques de précision que dans l'art antérieur.

Selon un aspect de la présente invention, on effectue les phases de détection, de débrayage et de prise en charge quasiment simultanément.

4 0213033

Grâce à cette disposition qui est avantageusement mise en oeuvre lorsque le balancement du produit au bout des élingues présente une amplitude relativement faible et/ou une période relativement longue, la prise en charge du produit par le chariot de manutention s'effectue dès que, et au moment où, le produit est détecté dans la position de référence. Le déplacement du produit dans la chaîne n'est pas interrompu, ce qui résulte en une absence de perte de temps.

Selon un autre aspect du procédé selon la présente invention, après la prise en charge du produit par le chariot de manutention, on recale ce chariot en sorte que le produit se trouve à nouveau dans la position de référence, et on déplace alors le chariot de manutention selon la loi de mouvement prédéterminée le long du segment.

Cette disposition qui est avantageusement mise en oeuvre lorsque la période du balancement est relativement courte et/ou lorsque l'amplitude du balancement est relativement importante, permet de positionner le produit à traiter dans une référence spatiale précise avant le commencement des opérations de montage, de traitement ou de fabrication.

La mise en oeuvre du robot devant assurer ces opérations de traitement, de montage et de fabrication se trouve ainsi grandement facilitée puisque le calculateur du robot dispose alors d'une référence spatiale précise du produit. Il en résulte bien évidemment, s'agissant par exemple des opérations de mise en peinture d'une carrosserie, une grande précision de pulvérisation.

Selon une autre variante du procédé selon l'invention, lesdites phases de détection et position de référence étant appelées respectivement "première phase de détection" et "première position de référence", dans une seconde phase de détection, après la prise en charge du produit par le chariot de manutention, on détecte le produit dès que ce dernier est dans une position longitudinale dite "seconde position de référence".

Grâce à cette disposition, quel que soit le balancement du produit en amont du segment, on peut charger "à la volée" ce produit sur le chariot de convoyage, dès que ce produit est détecté dans la

premièreposition de référence, sans interrompre le déplacement du produit le long de la chaîne. On détecte ensuite à nouveau le produit dès qu'il se trouve dans la seconde position de référence, en sorte que le calculateur du robot dispose ainsi d'une référence spatiale précise.

Selon une autre caractéristique du procédé selon la présente invention, la loi de mouvement comporte une vitesse variable en sorte que la vitesse de déplacement du chariot de manutention le long du segment peut être adaptée aux opérations de montage, de traitement ou de fabrication effectuées dans ledit segment de la chaîne de fabrication.

Grâce à cette disposition, la mise en oeuvre du robot, par exemple de mise en peinture, se trouve encore plus facilitée puisque l'on peut, par exemple, ralentir la vitesse de progession du produit ou arrêter momentanément le produit, voire même lui imprimer un mouvement inverse par rapport à celui de la chaîne, pour permettre au robot de réaliser certaines opérations délicates.

On augmente ensuite la vitesse du chariot de manutention pour permettre au produit de rattraper le "retard" ainsi occasionné par rapport au convoyeur-moteur.

Le dispositif de déplacement contrôlé selon la présente invention est notamment caractérisé en ce qu'il comporte au moins un moyen de détection adapté à détecter le produit dans le segment, lorsque ce dernier se trouve dans une position longitudinale, dite "position zéro", un chariot de manutention mobile le long dudit segement comportant des moyens de préhension et de positionnement du produit.

Ce dispositif permet une mise en oeuvre particulièrement aisée du procédé selon la présente invention, le chariot comportant des moyens permettant de saisir et de positionner le produit en sorte qu'il se trouve dans une position prédéterminée par rapport au chariot, sa position spatiale se trouve alors connue avec exactitude.

Selon une autre caractéristique de la présente invention, le chariot est monté mobile sur des rails disposés le long dudit segment.

Grâce à cette caractéristique, une mise en oeuvre particulièrement simple du procédé selon la présente invention est ainsi réalisée.

Les caractéristiques et avantages de la présente invention ressortiront d'ailleurs de la description qui va suivre en référence aux dessins annexés sur lesquels :

- la figure 1 est une vue schématique en élévation d'un segment d'une chaîne de fabrication de voitures comportant le dispositif de la présente invention,

- la figure 2 est une vue en coupe transversale du segment selon la ligne II-II de la figure 1,

- la figure 3 est une vue de dessus du dispositif (ligne III-III sur la figure 1),

- la figure 4 est une vue schématique en élévation, à plus grande échelle, du mécanisme de convoyage illustré en figure 1,

- la figure 5 illustre de façon schématique le mécanisme d'entraînement des éléments de manutention du dispositif selon l'invention,

- la figure 6 est une vue simplifiée en perspective d'un mode de réalisation d'un élément de manutention du dispositif selon l'invention illustré aux figures 1 à 3.

La présente description a trait à un mode de réalisation de l'invention appliqué aux déplacements contrôlés de carrosseries de voitures dans un segment d'une chaîne de fabrication de voitures, la mise en peinture de la partie inférieure de la carrosserie étant effectuée dans ce segment.

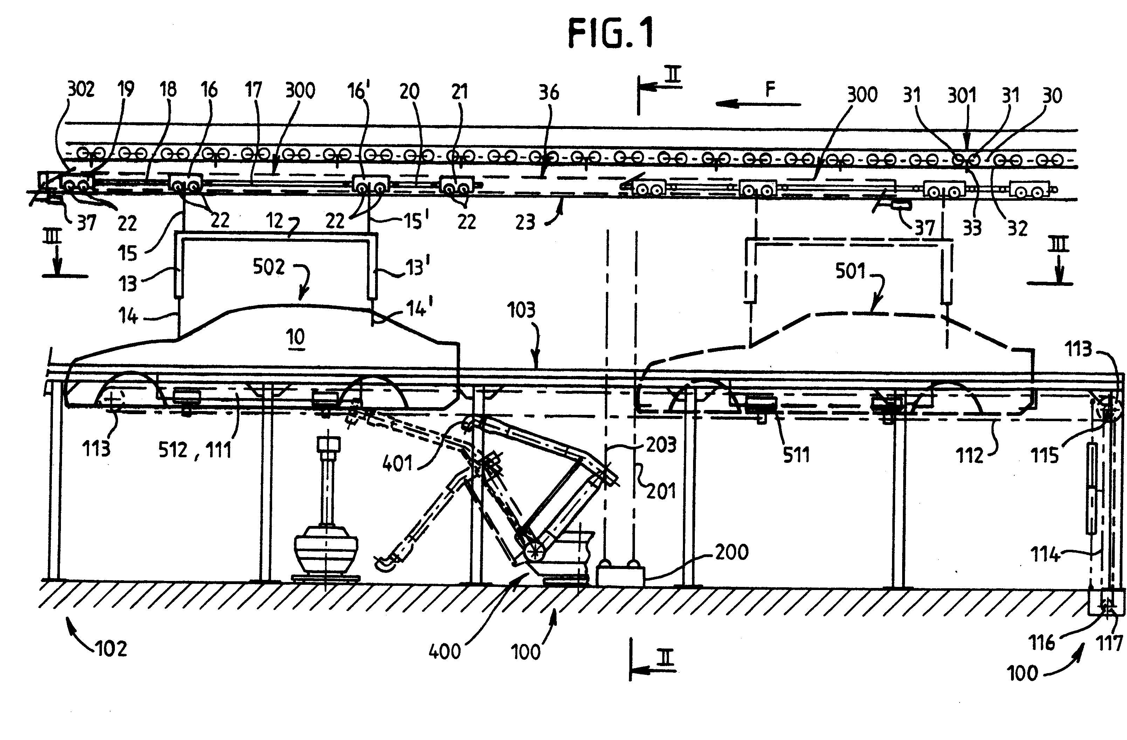

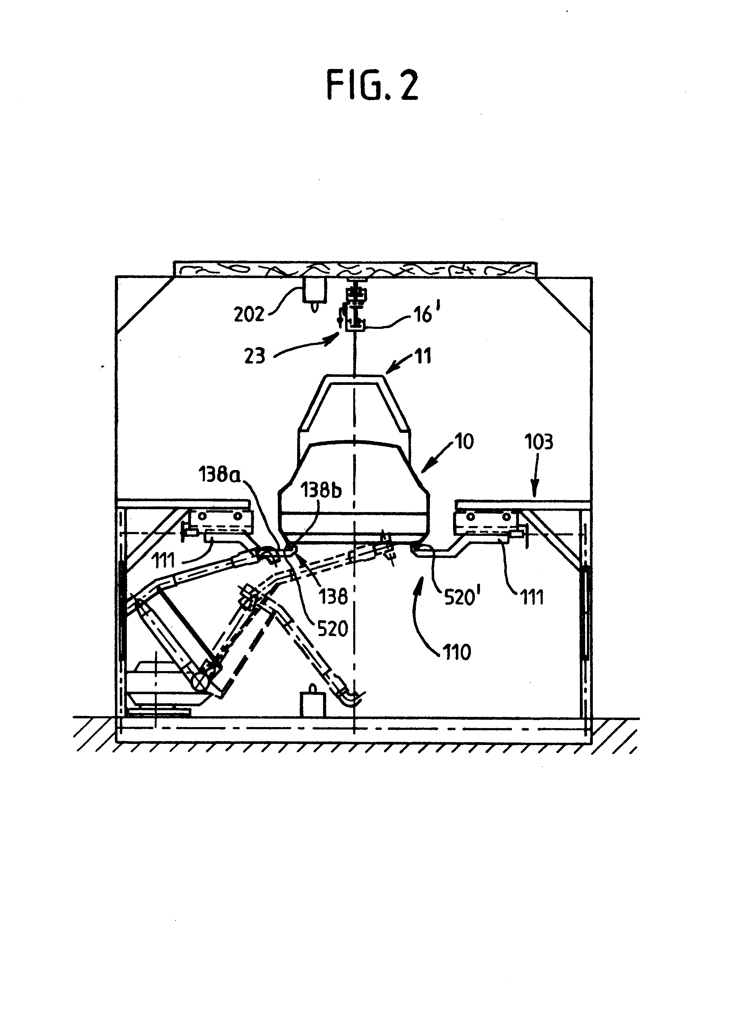

Dans la chaîne de fabrication choisie et représentée, les carrosseries sont convoyées entre les différents postes de travail de façon classique par un convoyeur débrayable, qui est ici du type de celui commercialisé par CFC, modèle "Power et Free". Les carrosseries 10 sont suspendues à un palonnier 11 comportant une barre longitudinale 12 principale aux extrémités de laquelle sont montés deux arceaux transversaux 13, 13', figures 1 et 2. Ces arceaux transversaux présentent une forme en V inversée tronqué. La carrosserie est suspendue, par des élingues dites secondaires 14, 14' aux extrémités de chaque arceau, tandis que l'ensemble palonnier-carrosserie est lui-même suspendu, par des élingues dites principales 15, 15' à des trolleys de convoyage avant et arrière dits "trolleys de support" et référencés en 16, 16' sur les dessins. Les deux trolleys de support 16, 16' sont attelés par une barre d'attelage 17, dite "médiane". De façon tout à fait classique, l'un des deux trolleys-support, le trolley support avant16 disposé du côté avant de la carrosserie, est attelé par une barre d'attelage de tête 18 à un trolley de contrôle de tête 19 tandis que le deuxième trolley-support, le trolley-support arrière 16', est attelé par une barre d'attelage de queue 20 à un trolley de contrôle de queue 21.

L'ensemble 300 constitué par les deux trolleys-support 16, 16', la barre d'attelage médiane 17 les reliant, les deux trolleys de contrôle de tête 19 et de queue 21 respectivement reliés au trolley support avant 16 par la barre d'attelage de tête 18 et au trolley support arrière 16' par la barre d'attelage de queue 20, constitue une forme de réalisation de ce que l'on appelle, au sens de la présente demande de brevet : "chariot de convoyage".

Les trolleys 16, 16', 19, 21 comportent des moyens de roulement schématisés en figure 1 sous les références 22 et sont montés, de façon tout à fait classique dans l'art considéré, dans un rail de roulement schématisé en coupe longitudinale sur la figure 1 et en coupe transversale sur la figure 2 et portant la référence 23.

On observe que le chariot de convoyage auquel est suspendue la carrosserie 10 est susceptible de rouler et de déplacer ainsi cette carrosserie 10 sur le rail de roulement 23.

Le chariot de convoyage est entraîné par un convoyeur-moteur constitué de façon classique par une chaîne 30 montée avec des galets de roulement 31, adaptée à rouler sur un rail de roulement de convoyeur-moteur référencé en 32. Des poussoirs 33 sont montés à intervalle régulier sur la chaîne d'entraînement 30 entre deux galets 31, chaque ensemble 301 de deux galets 31 et d'un poussoir 33 étant dit "trolley-moteur".

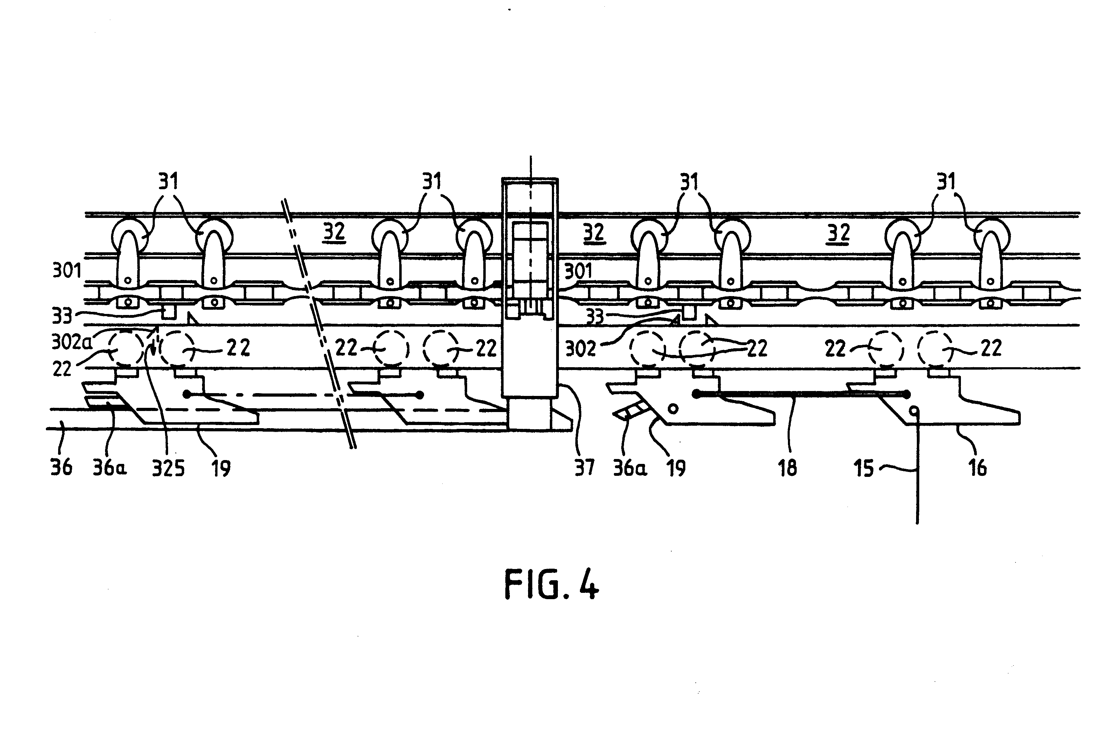

De façon classique, les poussoirs 33 viennent, le cas échéant, en butée sur un chien d'entraînement 302 (figure 4) que comporte chaque trolley de contrôle de tête 19. De plus chacun de ces derniers comporte des moyens permettant d'escamoter le chien, permettant ainsi, de façon classique, un désaccouplage entre le trolley de tête, et par conséquent, l'ensemble du chariot de convoyage, d'avec le convoyeur-moteur.

L'ensemble de ces dispositions, tout à fait classique, dans l'art de la fabrication des voitures à la chaîne, est de ce fait bien connu de l'homme de l'art et n'a pas besoin d'être décrit plus en détail ici.

Toutefois, selon une caractéristique du dispositif de l'invention, ce dernier comporte des moyens permettant de désolidariser le chariot de convoyage du convoyeur-moteur.

Dans la forme de réalisation choisie et représentée aux figures, notamment les figures 1, 4, ces moyens comportent d'une part, une barre de désaccouplage 36 montée sur un ensemble de deux mécanismes 37 d'élévation, un seul de ces mécanismes étant représenté sur la figure 4, permettant de déplacer la barre de désaccouplage 36 parallèlement à elle-même, dans un plan vertical. Ces moyens de désolidarisation comportent également, pour coopération avec la barre de désaccouplage 36, une mâchoire de débrayage 36 a montée sur le trolley de tête 19, venant en intersection avec le plan vertical de débattement de la barre de désaccouplage 36.

La mâchoire du trolley de tête de la partie gauche de la figure 4 est illustrée en prise avec la barre de désacouplage 36, ce qui a pour effet, par le biais de moyens non représentés, de rétracter, selon le sens de la flèche 325, le chien d'entraînement 302 du trolley de tête. Cette rétractation est schématisée en 302a.

On va maintenant décrire un mode de réalisation préféré d'un dispositif de prise en charge selon l'invention.

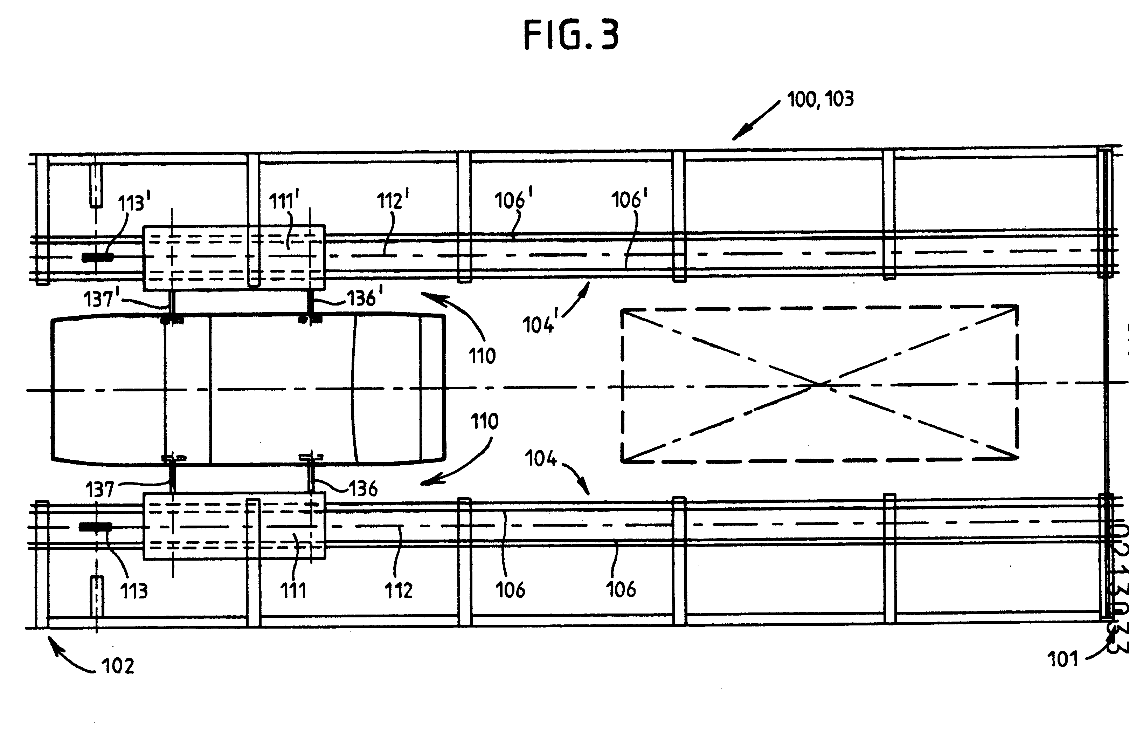

Dans l'exemple choisi et représenté sur les figures, la mise en peinture des carrosseries de voitures a lieu dans un segment de la chaîne de fabrication des voitures, ce segment incorporant un dispositif de prise en charge 100, et s'étendant entre une extrémité amont 101 et une extrémité aval 102 par rapport au sens de défilement du convoyeur schématisé par la flèche F. Ici le segment de la chaîne est matérialisé par une structure de manutention 103 comportant, notamment, deux ensembles 104, 104' de rails doubles, 106, 106', s'étendant entre les extrémités amont 101 et aval 102, figure 3. Dans la suite de la description les rails 106, 106' seront appelés "rails de manutention".

Selon une caractéristique de l'invention, le dispositif de prise en charge 100 comporte un chariot, dit de manutention, 110, visible notamment en figure 2, qui est, d'une manière générale, mobile le long dudit segment et comporte des moyens de préhension et de positionnement du produit en fabrication, ici les carrosseries 10.

Selon une autre caractéristique de la présente invention, plus particulièrement mise en oeuvre dans le mode de réalisation préféré illustré aux figures, le chariot de manutention 110 comporte deux éléments indépendants 111 disposés de part et d'autre de l'axe de symétrie longitudinal du segment 103, ces éléments étant appelés dans la suite de la description : "éléments de chariot de manutention" ou plus simplement : "éléments de manutention".

Un dispositif du mécanisme 310 d'entraînement des éléments de manutention 111 est représenté de façon schématique aux figures 1 à 3 et 6. Chaque élément de manutention 111 est entraîné par une chaîne dite de manutention 112 (112') schématisée en traits mixtes sur les figures 1 et 3. Chaque chaîne 112 112' est tendue entre deux rouleaux d'entraînement 113 (113'), l'un de ceux-ci, celui à l'extrémité amont étant accouplé à un rouleau denté maître 115 (115') entraîné par une chaîne motrice 114 (114'). Les deux chaînes motrices 114, 114' sont entraînées elles-mêmes par un axe rotatif moteur 116 présentant deux roues dentées 117, 117' pour entraînement des chaînes motices 114, 114'. L'axe d'entraînement 116 est quant à lui entraîné par un moteur 118 qui, dans le mode de réalisation choisie et représentée, est un moteur hydraulique.

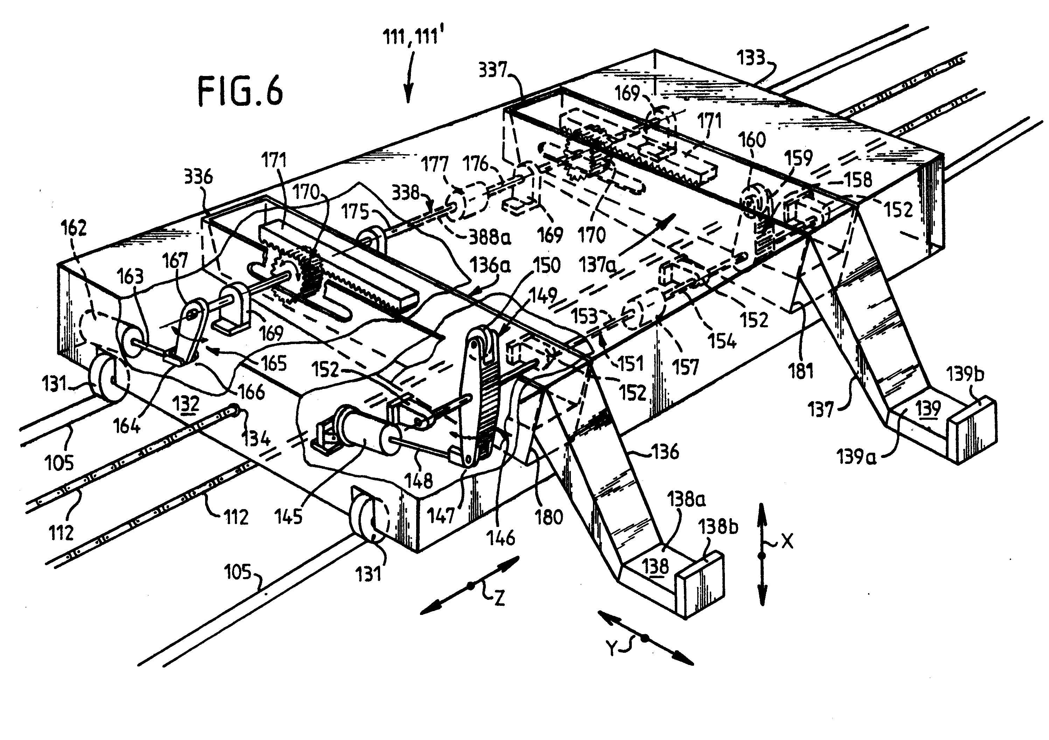

Le dispositif d'entraînement 310 des deux éléments de manutention 111, 111' comportant notamment l'ensemble des moyens 112 (112') à 117 (177'), 118 a été représenté de façon schématique sur les figures, et notamment sur la figure 6, les détails de construction d'un tel mécanisme d'entraînement étant par ailleurs à la portée de l'homme de l'art, le mécanisme d'entraînement selon l'invention n'ayant donc pas besoin d'être décrit plus en détail ici.

On va maintenant décrire à l'appui de la figure 7 l'un, 111, des deux éléments de manutention 111, 111'.

0213033

Sur cette figure, seuls les éléments nécessaires à la compréhension de l'invention et à celle du mode de réalisation illustrée ont été représentés dans un but de simplification et pour permettre une compréhension aisée de l'invention. La demanderesse tient à souligner que les autres éléments non représentés sur cette figure, lorsqu'ils ne sont pas représentés et décrits à l'appui d'autres figures de la présente demande, ne sont que des détails de construction, qui étant largement usités dans l'Art de la Mécanique, font par conséquent partie des connaissances générales de l'homme du méier, et n'ont donc pas besoin d'être représentés et explicités en détail dans la présente demande.

Pour coopération avec les rails de roulement 105, chaque élément 111 comporte des roulettes 131. La chaîne d'entraînement 112, visible sur cette figure, est solidarisée à l'élément de manutention 111 aux extrémités amont 132 et aval 133 de ce dernier. Le point de fixation de la chaîne d'entraînement 112 est représenté de façon schématique en 134, sur l'extrémité amont 132.

Pour préhension des carrosseries 10, l'élément 111 comporte, dans ce mode de réalisation, un bras de préhension amont 136 et un bras de préhension aval 137.

Dans cette forme de réalisation les bras 136, 137 sont inclinés vers le bas et présentent chacun une extrémité radiale interne, l'une 138, dite "extrémité radiale de préhension amont" et l'autre 139, dite "extrémité radiale de préhension aval". Selon une autre caractéristique de la présente invention avantageusement mise en oeuvre dans le mode de réalisation choisi et représenté aux figures, lesdites extrémités radiales internes 138, 139 des bras de préhension 136, 137 présentent une forme en crochet adaptée à coopérer avec une saillie longitudinale que présente le produit en traitement, ici les deux saillies 520 que présentent chaque carrosserie 10, figure 2.

On observe à cet effet que l'extrémité radiale interne 138 du bras de préhension amont 136 présente une forme en crochet qui est ici constituée d'une part, par un méplat 138a et d'autre part, par une butée 138b. Il en est de même pour l'extrémité 139 qui comporte un méplat 139b et une butée 139b. On observe, figure 2, quela butée 138b vient en vutée contre la saillie radiale interne 520. Il en est bien entendu de même pour la butée 139b non représentée sur cette figure. Dans la suite de la description les extrémités radiales de préhension amont 138 et aval 139 seront dites "crochet amont" et "crochet aval".

Dans cette forme de réalisation, le bras amont 136 comporte un avant bras amont 136a, tandis que le bras aval comporte un avant bras aval 137a. Ces avant bras présentent, en coupe transversale, une section en U inversé dont les branches sont verticales et sont reliées par un segment horizontal.

Les crochets 138, 139 des bras 136, 137 sont mobiles dans un plan vertical, transversal au segment, schématisé par les flèches x et y sur la figure 7. Chaque bras 136, 137 est articulé autour d'un axe 338, le mouvement de chaque crochet 138, 139 selon l'axe x étant, dans ce mode de réalisation, contrôlé par un moyen moteur, ici un vérin 145 dit "de contrôle vertical". Le vérin 145 agit sur un levier dont une première extrémité 147 est reliée à la tige 148 du vérin 145, tandis que la seconde extrémité 149 présente une roulette 150 venant au contact du plan horizontal interne de l'avant bras 136a. Le levier 146 est solidaire en rotation d'un axe 151 monté sur des pivots fixes 152. L'axe 151 est séparé en deux parties 153, 154 solidaires en rotation l'une de l'autre part l'intermédiaire d'un dispositif élastique de compensation, déformable en torsion 157.

La seconde partie 154 de l'axe 151 est solidaire en torsion d'un élément de levier 158 dit "de contrôle vertical" portant à son extrémité supérieure 159 une roulette 160 venant au contact du plan horizontal interne de l'avant bras 137a. L'élément de levier 158 présente des dimensions semblables à celles de la partie du levier 146 comprise entre l'axe 151 et la roulette 150.

Pour permettre un déplacement radial (selon l'axe y) des crochets 138, 139 des bras 136, 137, l'élément de manutention 111 comporte un vérin dit "de déplacement radial" 162 agissant, par l'intermédiaire de sa tige 163 munie d'une chape 164, sur un levier dit "de déplacement radial" 165 dont une première extrémité 166 est montée sur la chape 164 et dont la deuxième extrémité 167, est solidaire en rotation de l'axe 138, cet axe étant monté à pivotement sur des pivots, dits de déplacement radial 169. L'axe de rotation 338 est matérialisé par un axe 338a, dit "de déplacement radial" solidaire.

L'axe de déplacement radial 338 solidaire, au niveau de chacun des bras 136, 137, d'une roue dentée 170, chacun des avant-bras 136a, 137a comportant à l'intérieur, engagée sur la roue dentée, une crémaillère 171.

L'axe 338a comporte lui aussi deux parties 175, 176 montées solidaires en rotation par l'intermédiaire d'un dispositif de compensation déformable en torsion, et référencé en 177 sur la figure 7.

On observera que l'élément de manutention 111 comporte deux logements 180, 181 permettant de guider les bras 136, 137 dans le sens radial et conformés de façon à permettre un débattement des crochets 138, 139 de ces bras dans le sens schémaétisé par la flèche x.

Le dispositif comporte également, selon une caractéristique de l'invention, un générateur de rayons laser 200, adapté à émettre un rayon laser 201 et un détecteur 202 de présence de rayons laser. Sur les figures 1 et 2, l'émetteur de rayons laser 200 est représenté, tandis que le détecteur 202 n'est représenté que sur la figure 2.

Selon une autre caractéristique de la présente invention, mise en oeuvre dans le mode de réalisation représentée sur les figures, l'émetteur de rayons laser 200 est adapté à émettre un deuxième rayon laser 203, tandis que le détecteur 202 est adapté à détecter la présence de ce deuxième rayon laser 203.

Le premier rayon laser 201 émis dans une position longutidinale correspondant à une position appelée dans la suite de la description "première position de référence". Le deuxième rayon laser 203 est émis suivant une position longutidinale appelée dans la suite de la description "deuxième position de référence".

Le dispositif représenté sur les figures comporte également un robot de mise en peinture 400 comportant un dispositif de pulvérisation de peinture 401 de type conventionnel. Dans le mode de réalisation représentée, le robot 400 permet de faire déplacer le dispositif de pulvérisation 401 selon six degrés de liberté. Le robot est contrôlé par un ordinateur non représenté sur les figures.

L'ordinateur est adapté à permettre la commande du robot dans les six degrés de liberté et à contrôler, par l'intermédiaire d'interfaces appropriées plusieurs autres fonctions. Dans le mode de réalisation décrit et représenté, le robot est du type GRACO GRI OM 5000 et l'ordinateur est en fait le calculateur de ce robot.

Les divers circuits hydrauliques commandant le moteur d'entraînement hydraulique 118, et les deux vérins de chaque élément de manutention, sont contrôlés par des détecteurs et des actionneurs classiques permettant de transformer un signal digital en un signal hydraulique, les détecteurs et actionneurs étant eux-mêmes raccordés à l'ordinateur. De même les dispositifs d'élévation 37 ainsi que le déteceur 202 sont raccordés, avec des interfaces appropriées, à l'ordinateur.

On va maintenant décrire le fonctionnement du dispositif représenté sur les figures 1 à 6, dispositif permettant la mise en oeuvre du procédé de contrôle du déplacement d'un produit dans un segment d'une chaîne de fabrication selon l'invention, ici appliqué à un poste de peinture de carrosserie automobile.

Chaque carrosserie 10 est suspendue par l'intermédiaire dupalonnier 11 et les élingues secondaires 14, 14' au trolley de support avant 16 et arrière 16' du chariot de convoyage 300. Ce chariot de convoyage peut rouler librement sur le rail de roulement 23 et peut, en fonction des situations pouvant se présenter, être ou ne pas être entraîné en translation par le convoyeur moteur et notamment par les trolleys moteur 301. A cet effet le chien rétractable 302 du trolley de tête 19 peut coopérer par engagement avec le poussoir 33 que comporte chaque trolley moteur 301.

Dans les figures 1 et 3, deux carrosseries ont été représentées. La carrosserie référencée en 501 a été représentée en traits mixtes pour illustrer une carrosserie entraînée de façon classique dans la chaîne. Sur cette figure la carrosserie 512 est en position entrante dans le segment 103. La carrosserie 502 est en cours de traitement (mise en peinture) dans le segment. Au cours du fonctionnement normal, les carrosseries ne se retrouvent pas dans les positions 511 et 512 simultanément mais au contraire un intervalle plus important,défini plus loin, est laissé entre deux carrosseries.

En temps normal, hors segment, le chien 302 du trolley de tête est en position relevée en sorte que le poussoir 33 d'un trolley moteur 31 vient s'engager contre ce chien d'entraînement 302, entraînant ainsi le long de la chaîne de fabrication le chariot de convoyage 300 d'une carrosserie considérée, la carrosserie 501 sur la figure 1. De façon classique les trolleys de contrôle de tête 19 et de contrôle de queue 21 sont munis d'un dispositif permettant d'escamoter le chien d'entraînement 302 dès lors que le trolley de tête 19 vient buter contre un trolley de queue 21 du chariot de convoyage d'une carrosserie précédente. L'escamotage du chien d'entraînement 302 permet de désolidariser le chariot de convoyage considéré du convoyeur moteur.

Le fonctionnement du dispositif de convoyage représenté sur la figure 1 est bien connu de l'homme de l'art et n'a par conséquent pas besoin d'être décrit plus en détail ici.

Toutefois comme mentionné plus haut le dispositif selon l'invention comporte, à l'aplomb du segment 103, une barre de désaccouplage 36 montée sur un ensemble de deux mécanismes 37 d'élévation, un de ces mécanismes étant visible en figure 4. Dès lors que ces mécanismes 37 sont mis en action, d'une manière qui sera exposée plus bas, la barre 36 de désaccouplage qui s'élève vient s'engager sur la tige de débrayage 37 du trolley de tête 19, permettant ainsi de commander l'escamotage du chien d'entraînement 302.

Les carrosseries 10 entraînées le long du convoyeur, sont soumises à un certain nombre d'à-coups occassionnés par exemple par de brusques et soudaines désolidarisation-resolidarisation, des chariots de convoyage avec le convoyeur moteur. De plus la chaîne de convoyage n'est pas elle-même exempt d'à-coups. Il s'ensuit un balancement des carrosseries 10, balancement pouvant avoir lieu aussi bien dans un plan longitudinal que dans un plan transversal.

L'homme de l'art sait bien que ces balancements sont difficiles à contrôler et à prendre en compte pour certaines opérations délicates telles que la mise en peinture.

Selon l'invention, dès qu'une carrosserie 10 aborde le segment 103, elle entre dans une phase du procédé dite "de détection".

D'une manière générale au cours de cette phase de détection, on détecte le produit en traiement, ici la carrosserie 10, dès que ce dernier, ou cette dernière, est dans une position longitudinale dite "première position de référence".

Dans le mode de réalisation représenté aux figures, cette détection est réalisée dès que la carrosserie, la carrosserie 501 sur la figure 1 coupe le premier rayon laser 201. Un signal est alors transmis par le détecteur 202 à l'ordinateur commandant le robot 400.

Ensuite, d'une manière générale, dans une phase dite "de débrayage", on désolidarise le chariot de convoyage du convoyeur moteur.

Dans la forme de réalisation représentée aux figures, dès que l'ordinateur a reçu le message de détection envoyé par le détecteur 202, il commande le mécanisme élévateur 37 en sorte que la barre de désaccouplage 36 est élevée et vient entraîner la tige de débrayage 37 du trolley de tête 19 du chariot de convoyage de la carrosserie 501. Le chariot de convoyage est alors désolidarisé du convoyeur moteur.

Ensuite, d'une manière générale, dans une phase dite "de prise en charge", on dispose le produit, ici la carrosserie 501, dans un chariot de manutention mobile le long du segment. Dans la forme de réalisation choisie et représentée sur les figures 1 à 7, il s'agit bien évidemment du chariot de manutention 110 comportant les deux éléments de manutention 111. Sur la figure 1 un des éléments de manutention a été représenté en traits mixtes sous la carrosserie 501 et porte la référence 511.

Il convient de décrire ici la manière de mettre en oeuvre la phase de prise en charge dans le mode de réalisation représenté aux figures.

En début de cycle, dès avant la phase de détection, l'ordinateur commande la mise en place des éléments de manutention 111 constituant, dans ce mode de réalisation le chariot de manutention 110, dans la position schématiquement représentée en 511 sur la figure 1, au voisinage de l'extrémité amont 101 du segement 103. Cette position, qui est dite position de départ, est constante pour tous les cycles. Elle est déterminée en fonction de la taille et de la forme des carrosseries mises en peinture, et plus précisément en fonction de la position qu'occupent, sur le plan longitudinal, les saillies 520 disposées sur le dessous de la carrosserie, au voisinage des bords latéraux de celle-ci.

Le déplacement du chariot 510 le long des rails 106, 106' est assuré par le dispositif d'entraînement 310 (figure 6), le moteur hydraulique 118 entraînant l'axe 116, qui entraîne de son côté par l'intermédiaire des roues dentées 117, 117' les chaînes motrices 114, 114' et les rouleaux dentés maîtres 115, 115'. Ces derniers couplés aux rouleaux d'entraînement 113, 113' entraînent de ce fait la chaîne de manutention 112, 112' venant en prise directe sur les éléments de manutention 111, 111' comme décrit plus haut à l'appui de la figure 7.

L'ordinateur, raccordé à un interface actionneur permettant de transformer un signal digital en un signal hydraulique commande le mouvement du moteur hydraulique 118, en sorte que le chariot de manutention peut se déplacer, du voisinage de l'extrémité amont du segment 103, position schématisée en 511, au voisinage de l'extrémité aval 102 de ce segment 103 dans la position 512 qu'occupe l'élément de manutention 111 représenté en traits pleins sur la figure 1.

Le chariot de manutention 110 étant dans sa position dite de départ, l'ordinateur agit sur le circuit hydraulique raccordé au vérin de contrôle vertical 145 de chacun des éléments de manutention 111, 111' en sorte que la première extrémité du levier de contrôle vertical 146 s'éloigne du corps du vérin 145. Ce mouvement du levier de contrôle vertical a pour effet :

- de faire rouler la seconde extrémité 149 de ce levier 146 en direction de l'extrémité radiale externe 336 du bras de préhension amont 136 opposée au crochet 138,

- d'entraîner en rotation l'axe de contrôle vertical 151, lequel imprime à l'élément de levier de contrôle vertical 158 un mouvement similaire de celui du levier du contrôle vertical 146 en sorte que l'extrémité 150 de cet élément de levier roule sur la surface interne du bras 137 en direction de l'extrémité radiale externe 337 de ce bras, opposée au crochet 139.

Le déplacement des extrémités 149 et 159 du levier de contrôle vertical 146 et de l'élément de levier de contrôle vertical 158 entraîne un abaissement des crochets 138, 139 des bras de préhension 136, 137 selon l'axe x. Leur position est alors dite "basse".

Parallèlement l'ordinateur agit sur le circuit hydraulique contrôlant le vérin de déplacement radial 162 en sorte que sa tige 163 rapproche la chape 164 du corps de vérin imprimant ainsi, par l'intermédiaire du levier de déplacement radial 165, une rotation des roues dentées 170 dans le sens des aiguilles d'une montre, figure 6. La rotation de chaque roue dentée 170 imprime à la crémaillère 171 montée à l'intérieur de chacun des avant-bras 136a, 137a un mouvement radial, dans le sens de l'axe y, en sorte que les crochets 138, 139 s'éloignent du corps de l'élément de manutention 111.

Dès que les vérins 145, 162 ont fini cette première phase de leur action, les crochets 138, 139 des bras 136, 137 se trouvent dans une position basse et éloignée de l'élément de manutention 111, 111' considéré.

Dès lors, la carrosserie se trouvant sensiblement dans la première position de référence, tandis que le chariot de convoyage est désolidarisé du convoyeur moteur, l'ordinateur commande le vérin de contrôle vertical 145 en sorte que la tige 148 rentre dans le corps de vérin. Les extrémités 149, 159 du levier de contrôle vertical 146 et de l'élément de levier de contrôle vertical 158 roulent sur la surface interne des avant-bras 136a, 137a en sorte que les crochets 138, 139 viennent en une position dite "haute", position dans laquelle la carrosserie est portée par les crochets des éléments de manutention 111, 111' du chariot de manutention 110. Des détecteurs disposés dans le circuit hydraulique du vérin de contrôle vertical 145 permettent de transmettre à l'ordinateur l'information selon laquelle les crochets 138, 139 sont en position haute.

A ce moment, l'ordinateur commande le circuit hydraulique contrôlant le vérin de déplacement radial 162 en sorte que ce dernier pousse la tige 163 vers l'extérieur ramenant de ce fait, par l'intermédiaire des roues 170 et crémaillère 171, les crochets 138,

18 0213033

139 en direction du corps de l'élément 111, 111' considéré. Un détecteur placé dans le circuit hydraulique du vérin 162 permet de détecter la position de la tige de ce dernier dans laquelle lesdits crochets internes 138, 139 sont le plus en retrait. La position des crochets est alors dite "de travail".

Il convient de noter qu'en position basse-éloignée des crochets de chacun des éléments de manutention 111, la carrosserie reste portée par les élingues 14, 14', 15, 15'. Dès que l'ordinateur commande le vérin 145 en sorte que ce dernier fait remonter les crochets 138, 139 en position haute, le méplat 138a, 139a des crochets 138, 139 de chaque élément de manutention 111, 111' vient au contact des saillies 520, 520'. Lorsque les crochets sont en position haute, la carrosserie se trouve portée par ces derniers, les élingues 14, 14', 15, 15' n'étant plus en tension.

Selon une autre caractéristique de la présente invention avantageusement mise en oeuvre dans le procédé décrit à l'appui des figures 1 à 6 on positionne le produit, ici la carrosserie 30, en sorte que ce dernier ou cette dernière vient dans une position dite "position transversale de référence".

Dans la forme de réalisation choisie et représentée sur les figures, cette position est obtenue en actionnant le vérin 162 de chacun des éléments de manutention 111, 111' en sorte que les crochets 138, 139 viennent en position de travail, les butées 138b, 139b venant alors au contact des saillies 520, 520' alignant de ce fait la carrosserie 10 selon une direction parallèle à l'axe du segment 103. La carrosserie se trouve alors dans la position transversale de référence mentionnée ci-dessus, que l'ordinateur peut détecter dès lors que des capteurs disposés dans les circuits hydrauliques des vérins 145, 162 lui transmettent l'information selon laquelle les crochets sont en position de travail.

Dans ce mode de mise en oeuvre du procédé selon la présente invention, l'ordinateur dispose dès la phase de détection d'une référence longitudinale et dès la phase de prise en charge d'une référence transversale. En fait le laps de temps entre les diverses phases, qui est fonction du temps de réaction des divers circuits hydrauliques, est relativement petit devant la période du balancement de la carrosserie avant sa prise en charge. Le balancement ou, plus généralement, le déplacement longitudinal de la carrosserie entre sa détection dans la première position de référence et la prise en charge est relativement négligeable en sorte que cette première position de référence longitudinale sert de référence longitudinal à l'ordinateur pour la suite des opérations (mise en peinture).

On notera, figure 6, que les axes de contrôle vertical 151 et de contrôle radial 338a sont avantageusement munis d'un dispositif élastique compensateur en torsion, respectivement référence 157, 177. Ces dispositifs permettant d'amortir les chocs dus au balancement que risquent de subir les axes, levier et vérin de contrôle vertical ou radil, lors des mise en position haute et en position de travail de la carrosserie.

Dans une autre variante de mise en oeuvre du procédé selon la présente invention, les phases de détection, de débrayage et de prise en charge sont quasi-simultanées. En pratique, dès que l'ordinateur reçoit le signal de détection de position de référence, il commande à la fois les phases de débrayage et de prise en charge. Cette disposition permet de réduire encore plus le temps entre détection et prise en charge. Cette variante de réalisation ou celle précédemment décrite peut être avantageusement utilisée dès lors que la période de balancement de la carrosserie est relativement longue (quelques secondes) tandis que l'amplitude de ce balancement est relativement faible (déplacements longitudinaux de quelques centimètres au maximum).

Dans une autre variante de mise en oeuvre du procédé selon la présente invention avantageusement utilisée lorsque la période du balancement est relativement courte et/ou lorsque l'amplitude du balancement est relativement importante (une dizaine de centimètres par exemple) après la prise en charge du produit, ici la carrosserie 10, par le chariot de manutention, on recale ce chariot en sorte que le produit est à nouveau détecté dans la position de référence. En pratique, l'ordinateur commande le chariot en sorte que ce dernier se déplace en avant ou en arrière autour de la position de départ

# 0213033

schématisée en 510 sur la figure 1 jusqu'à ce que l'avant de la carrosserie 10 coupe à nouveau le premier rayon laser 201.

A ce moment la voiture se trouve dans une position de référence longitudinale très précisément connue par l'ordinateur.

D'une manière générale, après la phase de prise en charge, dans une phase dite "de travail", on déplace le chariot de manutention 110 selon une loi de mouvements prédéterminés le long dudit segment 103.

Dans le mode de réalisation choisi et représenté aux figures, l'ordinateur commande le moteur hydraulique 118 en sorte que le chariot de manutention 110 portant la carrosserie 10 se déplace le long du segment depuis la position de départ 511 jusqu'à la position d'arrivée 512. Pendant cette phase de travail, l'ordinateur commande le robot de peinture 400 en sorte que les opérations de peinture sont exécutées.

Selon une caractéristique de la présente invention, la dite loi de mouvements comporte une vitesse variable.

L'invention présente en effet l'avantage de permettre d'adapter la progression du chariot le long du segment 103 au travail particulier à réaliser.

Il se peut qu'il soit nécessaire, par exemple pour peindre dans la carrosserie 10 l'emplacement des roues, d'arrêter la progression du chariot voire même de lui imprimer un mouvement arrière (inverse de la flèche F).

Dès lors que le chariot de convoyage est complètement désolidarisé du convoyeur moteur, il n'existe aucune contrainte empêchant un arrêt momentané du chariot de manutention en un point particulier du segment 103, voire même un mouvement du chariot dans le sens inverse de la flèche F. La seule contrainte existant est en effet celle du débit de la chaîne de fabrication mais pour autant que ce débit soit respecté, il est possible de faire des arrêts momentanés voire même des mouvements arrières dans le segment 103. L'invention présente également l'avantage de permettre une programmation facile de cette loi de mouvements sur l'ordinateur.

Dans une autre variante de mise en oeuvre du procédé selon la présente invention, si l'on veut à la fois éviter d'avoir une position de référence longitudinale présentant une certaine erreur et éviter de faire un recalage comme mentionné plus haut, on peut, dans le mode de réalisation du dispositif représenté sur les figures, effectuer les phases de détection de débrayage et de prise en charge à la suite l'une de l'autre ou quasiment simultanément puis dans une seconde phase de détection venant entre la phase de prise en charge et la phase de travail on détecte le produit, ici la carrosserie 10,dès que ce dernier ou cette dernière est dans une position longitudinale dite seconde position de référence.

Dans cette forme de réalisation la seconde position de référence est déterminée par le second rayon laser 203 détecté par le dispositif récepteur 202. Ayant par exemple effectué la prise en charge de la carrosserie à la volée, le chariot commençant son déplacement dès que les crochets sont en position haute, avant même que la voiture soit alignée le long de l'axe longitudinal du segment 103. L'ordinateur détecte d'abord l'alignement de la carrosserie puis sa position longitudinale dès qu'elle coupe le second rayon laser 203 et, connaissant de ce fait la position spatiale de la carrosserie avec précision, peut alors commander le robot de façon optimale.

D'une manière générale à la fin de la phase de travail, dans une phase dite de reprise, on resolidarise au voisinage de l'extrémité aval du segment le chariot de convoyage audit convoyeur moteur.

Dans la forme de réalisation représentée aux figures, dès que les éléments de manutention 111 se trouvent dans la position représentée en 512 sur la figure 1 (position d'arrivée), l'ordinateur commande l'abaissement de la barre de désaccouplage 36 en sorte que le chien d'entraînement 302 du trolley de tête 19 du chariot de convoyage 300 de la carrosserie 502 est libéré et peut être entraîné à nouveau par une butée 33 d'un trolley moteur 301.

D'une manière générale dans une phase de décharge on libère le produit du chariot de manutention.

En pratique l'ordinateur commande la mise en position basse éloignée des crochets 138, 139 des éléments de manutention 111, 111'. La carrosserie est alors à nouveau portée par les élingues 14, 14'.

En fait les phases de reprise et de décharge sont simultanées dans le mode de réalisation choisi et représenté aux figures.

D'une manière générale, en dernier lieu, dans une phase dite "de retour" on ramène le chariot de manutention vers la position de départ.

Bien sûr l'ensemble des phases du procédé décrit ci-dessus doit prendre place dans un laps de temps compatible avec le débit de la chaîne de fabrication. Ainsi l'intervalle entre deux carrosseries doi être sensiblement supérieur à la longueur du segment 103, augmentée du déplacement du convoyeur moteur pendant le temps de retour du chariot de manutention de la position d'arrivée à la position de départ.

Bien entendu la présente invention ne se limite pas au mode de réalisation choisi et représenté sur les figures mais en englobe, bien en contraire, toutes les variantes.

En particulier il convient de signaler que le dispositif et plus particulièrement les chariots de manutention tels que celui représenté à la figure 6, sont bien adaptés pour permettre une peinture aisée de l'intérieur des carrosseries.

En effet, on sait qu'il convient pour ce faire d'introduire le bras du robot de peinture à l'intérieur de la carrosserie et qu'à cet effet, dans l'art antérieur, on soulève l'arrière de la carrosserie pour maintenir les portières ouvertes.

Dans l'art antérieur, on prévoit un dispositif permettant d'incliner le palonnier portant les élingues secondaires.

La présente invention permet de simplifier ces opérations puisque dans les éléments de manutention tels que celui illustré à la figure 6, on peut prévoir un vérin de contrôle vertical indépendamment pour chacun des bras de préhension en sorte que pour la mise en peinture de l'intérieur d'une carrosserie, le crochet du bras de préhension amont puisse être soulevé sensiblement plus que le crochet aval en sorte que la carrosserie se trouve inclinée, les portières étant de ce fait maintenues ouvertes. Bien entendu dans ce cas le ou les robots de peinture sont disposés sur le côté de la structure de manutention 103 représentée aux figures.

D'une façon générale il est possible de prévoir d'autres dispositions particulières telles que :

23

0213033

- disposition du robot,

- point de maintien de la carrosserie par le chariot de manutention,

- disposition des rails de roulement en sorte que toutes les configurations de peinture puissent être réalisées.

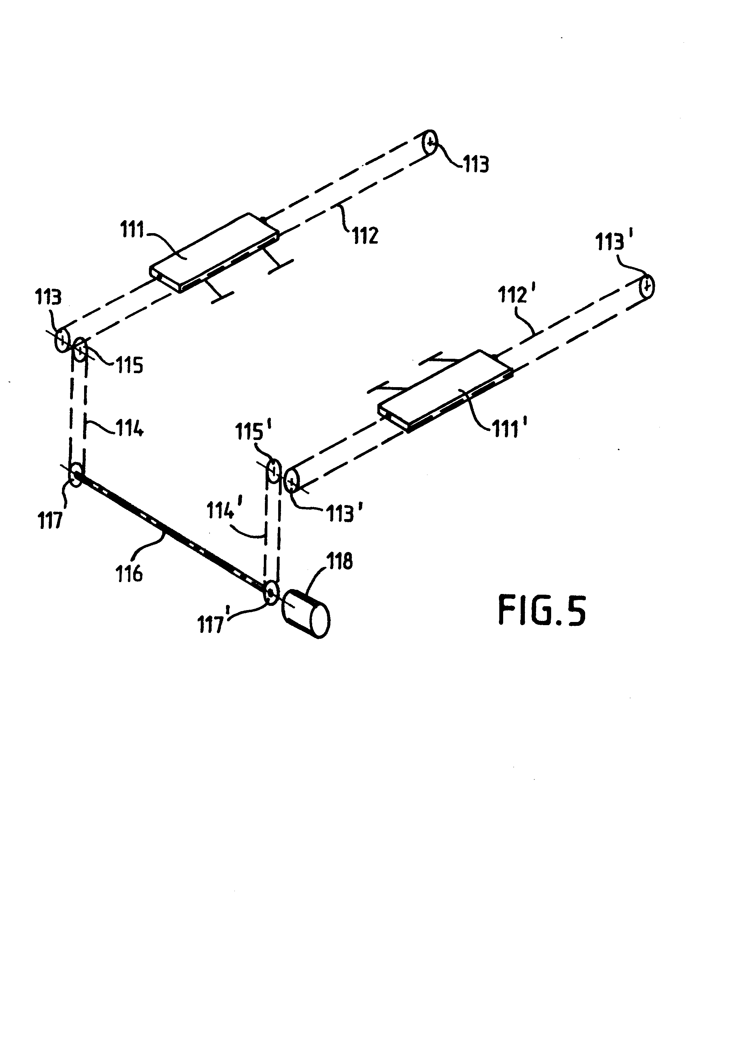

On notera aussi qu'il est possible de prévoir d'autres mécanismes d'entraînement du chariot de manutention que le mécanisme 310 schématiquement représenté à la figure 5.

On notera également que les saillies 520 prévues sur la carrosserie 10, figure 2, peuvent être remplacées dans certains cas de figure par des portions en creux susceptibles de permettre la préhension de la carrosserie.

On observera enfin que le procédé et le dispositif selon l'invention, lorsqu'ils sont appliqués au traitement des carrosseries automobiles, permettent de libérer presque totalement le dessous de la carrosserie, en sorte que lesdites opérations de traitement et, notamment, peinture, peuvent être très facilement exécutés.

REVENDICATIONS

1. Procédé de contrôle du déplacement d'un produit dans un segment d'une chaîne de fabrication de produits dans laquelle chaque produit est suspendu à un chariot de convoyage entraîné le long de la chaîne par un convoyeur moteur, le chariot de convoyage étant susceptible d'être désolidarisé du convoyeur moteur, procédé caractérisé en ce que le segment (103) s'étendant entre une extrémité amont (101), par rapport au déplacement (F) du produit dans la chaîne, et une extrémité aval (102) lorsqu'un produit pénètre dans le segment :

   - a) dans une phase dite de "détection", on détecte (201) le produit (10) dès que ce dernier est dans une position longitudinale dite "première position de référence",

   b) dans une phase dite de "débrayage", on désolidarise alors le chariot de convoyage (300) du co voyeur moteur (301),

   c) dans une phase dite par commodité de "prise en charge" on dispose le produit (10) dans un chariot de manutention (110) mobile le long du segment (103),

   d) dans une phase dite "de travail", on déplace le chariot de manutention 110 selon une loi de mouvement prédéterminée le long dudit segment (103),

   e) dans une phase dite de "reprise", on resolidarise, au voisinage de l'extrémité aval (102) dudit segment (103) le chariot de convoyage (300) audit convoyeur moteur (30),

   f) dans une phase dite, par commodité, de "décharge", on libère le produit (10) du chariot de manutention (110).

2. Procédé selon la revendication 1, caractérisé en ce que les phases de détection, de débrayage et de prise en charge sont quasi-simultanées.

3. Procédé selon la revendication 1, caractérisé en ce qu'après la prise en charge du produit (10) par le chariot de manutention (110) avant la phase de travail, on recale le chariot (110) en sorte que le produit se trouve à nouveau dans une position de référence.

0213033

4. Procédé selon l'une quelconque des revendications 1 à 3, caractérisé en ce que dans la phase de prise en charge, on recale le produit en sens transversal en sorte que ce dernier vient dans une position dite "position transversale de référence".

5. Procédé selon l'une quelconque des revendications 1 à 4, caractérisé en ce que ladite loi de mouvement comporte une vitesse variable.

6. Procédé selon l'une quelconque des revendications 1 à 5, caractérisé en ce que le chariot de manutention (110) comporte au moins un crochet de préhension (138, 139) mobile, dans un plan vertical (x, y) transversal audit segment (103).

7. Procédé selon l'une quelconque des revendications 1 à 6, caractérisé en ce que le chariot de manutention (110) comporte au moins deux éléments de manutention (111) disposés de part et d'autre d'un axe longitudinal du segment (103).

8. Procédé selon l'une quelconque des revendications 1, 2, 4 à 7, caractérisé en ce que dans une seconde phase de détection, on détecte le produit (10) dès que ce dernier est dans une seconde position de référence (203).

9. Procédé selon l'une quelconque des revendications 1 à 8, dans lequel lesdits produits sont des carrosseries automobiles (10), caractérisé en ce que les carrosseries présentant au moins une saillie longitudinale (520), lesdits moyens de préhension et de positionnement (138, 139) sont adaptés pour coopérer avec ladite saillie.

10. Dispositif de contrôle de déplacement d'un produit (10) dans un segment (103) d'une chaîne de fabrication de produits dans laquelle chaque produit est suspendu à un chariot de convoyage (300) entraîné le long de la chaîne par un convoyeur moteur (301), le chariot de convoyage étant susceptible d'être désolidarisé du convoyeur moteur, dispositif caractérisé en ce que le segment s'étendant entre une extrémité amont (10) par rapport au déplacement (F) du produit (10) et une extrémité aval, le dispositif comporte un moyen de détection (200, 202) adapté à détecter le produit (10) dans le segment, lorsque ce dernier se trouve dans une position longitudinale dite "position de référence" et un chariot de manutention (110) mobile le long dudit segment comportant des moyens de préhension et de positionnement (138, 139) du produit (10).

11. Dispositif selon la revendication 10, caractérisé en ce que le chariot de manutention (110) comporte deux éléments de manutention (111) indépendants, disposés de part et d'autre de l'axe de symétrie longitudinal du segment (103).

12. Dispositif selon l'une quelconque des revendications 10, 11, caractérisé en ce que lesdits moyens de préhension et de positionnement du produit comportent au moins un crochet (138) mobile dans un plan vertical transversal (x, y) audit segment (103).

13. Dispositif selon la revendication 12, caractérisé en ce que chaque élément de manutention (111) comporte au moins un moyen moteur de contrôle vertical (145) et au moins un moyen moteur de déplacement radial (162), ces moyens moteur étant adaptés à permettre le déplacement dudit crochet (138, 139) dans ledit plan transversal vertical (x, y).

14. Dispositif selon l'une quelconque des revendications 10 à 13, caractérisé en ce que ledit chariot de manutention comporte au moins un dispositif élastique de compensation (157, 177) adapté à amortir les chocs que peuvent subir en fonctionnement lesdits moyens de préhension et de positionnement du produit.

15. Application du procédé selon l'une quelconque des revendications 1 à 9 aux opérations de fabrication de voitures automobiles.

16. Application du dispositif selon l'une quelconque des revendications 10 à 14 aux opérations de fabrication de voitures automobiles.

17. Application selon l'une quelconque des revendications 15, 16 concernant plus particulièrement la mise en peinture des carrosseries (10).

## FIG. 2

# FIG.3

FIG. 4

FIG.5

FIG.6

# RAPPORT DE RECHERCHE EUROPEENNE

**0213033**
Numéro de la demande

EP 86 40 1750

Office européen
des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 132 312 (V.S. ENGINEERING LTD.) * Page 3, ligne 9 - page 4, ligne 22; figure 2 * | 1-17 | B 62 D 65/00 B 23 Q 7/14 |
| | --- | | |
| A | US-A-3 926 125 (O.J.B. ORWIN) * Revendication 1; figure 1 * | 1,2,10 | |
| | --- | | |
| A | US-A-3 426 700 (P. KLAMP) * Colonne 2, ligne 69 - colonne 3, ligne 13; figure 1 * | 1,2,6, 7,10 | |
| | --- | | |
| A | EP-A-0 144 478 (MONTICELLO TOWNSHIP KANSAS) * Revendication 1; figures 1-6 * | 1,2,5, 10 | |
| | --- | | **DOMAINES TECHNIQUES RECHERCHES (Int. Cl.4)** |
| A | PATENTS ABSTRACTS OF JAPAN, vol. 9, no. 164 (M-395)[1887], 10 juillet 1985; & JP-A-60 40 311 (MAZDA K.K.) 02-03-1985 | 1,3,4, 10 | B 23 Q B 62 D B 61 B B 23 K B 05 B |
| | --- | | B 25 J |
| A | PATENTS ABSTRACTS OF JAPAN, vol. 8, no. 220 (M-330)[1657], 6 octobre 1984; & JP-A-59 102 664 (DAIFUKU KIKO K.K.) 13-06-1984 | 1,3,4, 10 | |
| | --- | | |
| A | US-A-4 442 335 (C. ROSSI) | | |
| | --- -/- | | |

Le présent rapport de recherche a été établi pour toutes les revendications

| Lieu de la recherche | Date d'achèvement de la recherche | Examinateur |
|---|---|---|
| LA HAYE | 05-11-1986 | BELIBEL C. |

Office européen
des brevets

**RAPPORT DE RECHERCHE EUROPEENNE**

0213033
Numero de la demande

EP 86 40 1750

| Catégorie | Citation du document avec indication, en cas de besoin, des parties pertinentes | Revendication concernée | CLASSEMENT DE LA DEMANDE (Int. Cl.4) |
|---|---|---|---|
| **DOCUMENTS CONSIDERES COMME PERTINENTS** | | | Page 2 |
| A | US-A-3 948 186 (E.W. McCAUL) | | |
| A | GB-A-2 045 463 (HALL AUTOMATION LTD.) | | |

DOMAINES TECHNIQUES
RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 05-11-1986 | BELIBEL C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82